# EUROPEAN PATENT SPECIFICATION

(11) **EP 3 821 644 B1**
(45) Date of publication and mention of the grant of the patent: **11.11.2026**
(21) Application number: 19866019.3
(22) Date of filing: 23.09.2019
(51) Int. Cl.: H04W 36/18, H04W 36/00, H04W 74/0833

(54) **PDCP AND ROHC HANDLING FOR MULTI-CONNECTIVITY HANDOVER**
PDCP- UND ROHC-HANDHABUNG FÜR MULTIKONNEKTIVITÄTSÜBERGABE
GESTION DE PDCP ET DE ROHC PERMETTANT UN TRANSFERT INTERCELLULAIRE À CONNECTIVITÉS MULTIPLES

(30) Priority: 27.09.2018 US 201862737683 P
(43) Date of publication of application: 19.05.2021
(60) Divisional application: 23199059.9 / 4 274 302
(73) Proprietor: Apple Inc., Cupertino CA 95014 (US)
(72) Inventor: YIU, Candy, Portland, Oregon 97201 (US); ZHANG, Yujian, Beijing 100081 (CN); GUO, Yi, Shanghai 201801 (CN); HAN, Jaemin, PORTLAND, Oregon 97229 (US)
(74) Representative: Carpmaels & Ransford LLP
(86) International application number: PCT/US2019/052412
(87) International publication number: WO 2020/068659

(56) References cited:
- WO-A1-2012/146276
- WO-A1-2015/138069
- WO-A1-2017/138978
- US-A1- 2012 014 357
- US-A1- 2012 218 973
- US-A1- 2016 286 449
- US-A1- 2018 098 250
- MEDIATEK INC ET AL: "Mobility Enhancement for '0ms' interruption", vol. RAN WG2, no. Spokane, USA; 20170117 - 20170119, 12 February 2017 (2017-02-12), XP051211676, Retrieved from the Internet <URL:http://www.3gpp.org/ftp/Meetings_3GPP_SYNC/RAN2/Docs/> [retrieved on 20170212]
- HUAWEI ET AL: "Comparison of 0ms interruption solutions", vol. RAN WG2, no. Qingdao, China; 20170627 - 20170629, 26 June 2017 (2017-06-26), XP051301207, Retrieved from the Internet <URL:http://www.3gpp.org/ftp/Meetings_3GPP_SYNC/RAN2/Docs/> [retrieved on 20170626]
- ZTE CORPORATION: "Discussion on data forwarding in mobility enhancement solutions", vol. RAN WG3, no. Nanjing, China; 20160523 - 20160527, 22 May 2016 (2016-05-22), XP051105948, Retrieved from the Internet <URL:http://www.3gpp.org/ftp/Meetings_3GPP_SYNC/RAN3/Docs/> [retrieved on 20160522]
- "3GPP; TSG RAN; Evolved Universal Terrestrial Radio Access (E-UTRA) and NR; Multi-connectivity; Stage 2 (Release 15", 3GPP STANDARD; TECHNICAL SPECIFICATION; 3GPP TS 37.340, no. V15.3.0, 25 September 2018 (2018-09-25), pages 1 - 59, XP051487370

## Description

### TECHNICAL FIELD

Aspects pertain to wireless communications. Some aspects relate to wireless networks including 3GPP (Third Generation Partnership Project) networks, 3GPP LTE (Long Term Evolution) networks, 3GPP LTE-A (LTE Advanced) networks, and fifth-generation (5G) networks including 5G new radio (NR) (or 5G-NR) networks and 5G-LTE networks. Other aspects are directed to systems and methods for packet data convergence protocol (PDCP) and robust header compression (ROHC) handling for multi-connectivity handover in wireless networks.

### BACKGROUND

Mobile communications have evolved significantly from early voice systems to today's highly sophisticated integrated communication platform. With the increase in different types of devices communicating with various network devices, usage of 3GPP LTE systems has increased. The penetration of mobile devices (user equipment or UEs) in modern society has continued to drive demand for a wide variety of networked devices in a number of disparate environments. Fifth-generation (5G) wireless systems are forthcoming and are expected to enable even greater speed, connectivity, and usability. Next generation 5G networks (or NR networks) are expected to increase throughput, coverage, and robustness and reduce latency and operational and capital expenditures. 5G-NR networks will continue to evolve based on 3GPP LTE-Advanced with additional potential new radio access technologies (RATS) to enrich people's lives with seamless wireless connectivity solutions delivering fast, rich content and services. As current cellular network frequency is saturated, higher frequencies, such as millimeter wave (mmWave) frequency, can be beneficial due to their high bandwidth.

Potential LTE operation in the unlicensed spectrum includes (and is not limited to) the LTE operation in the unlicensed spectrum via dual connectivity (DC), or DC-based LAA, and the standalone LTE system in the unlicensed spectrum, according to which LTE-based technology solely operates in unlicensed spectrum without requiring an "anchor" in the licensed spectrum, called MulteFire. MulteFire combines the performance benefits of LTE technology with the simplicity of Wi-Fi-like deployments.

Further enhanced operation of LTE systems in the licensed as 15 well as unlicensed spectrum is expected in future releases and 5G systems. Such enhanced operations can include techniques for PDCP and. ROHC handling for multi-connectivity handover in wireless networks. WO2017/138978 discloses a handover method in which a UE can continue to receive data from a source base station during a handover process to a target base station.
Each of 3GPP documents R2-1700897, R2-1706707, and R3-161144 disclose improvements to handover procedures for dual connectivity UEs.
US2018/098250 discloses a method for allowing a UE to establish and maintain connections to a plurality of base stations.
US2012/218973 discloses a handover process in which a UE maintains a data connection with a source base station until handover is complete.

### SUMMARY

The invention is defined by the appended claims.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various aspects discussed in the present document.
FIG. 1A illustrates an architecture of a network, in accordance with some aspects.
FIG. 1B and FIG. 1C illustrate a non-roaming 5G system architecture in accordance with some aspects.
FIG. 2 illustrates a swimlane diagram of a handover using multi-connectivity, in accordance with some aspects.
FIG. 3 illustrates PDCP and ROHC handling before, during, and after a multi-connectivity handover, in accordance with some aspects.
FIG. 4 illustrates a block diagram of a communication device such as an evolved Node-B (eNB), a new generation Node-B (gNB), an access point (AP), a wireless station (STA), a mobile station (MS), or a user equipment (UE), in accordance with some aspects.

### DETAILED DESCRIPTION

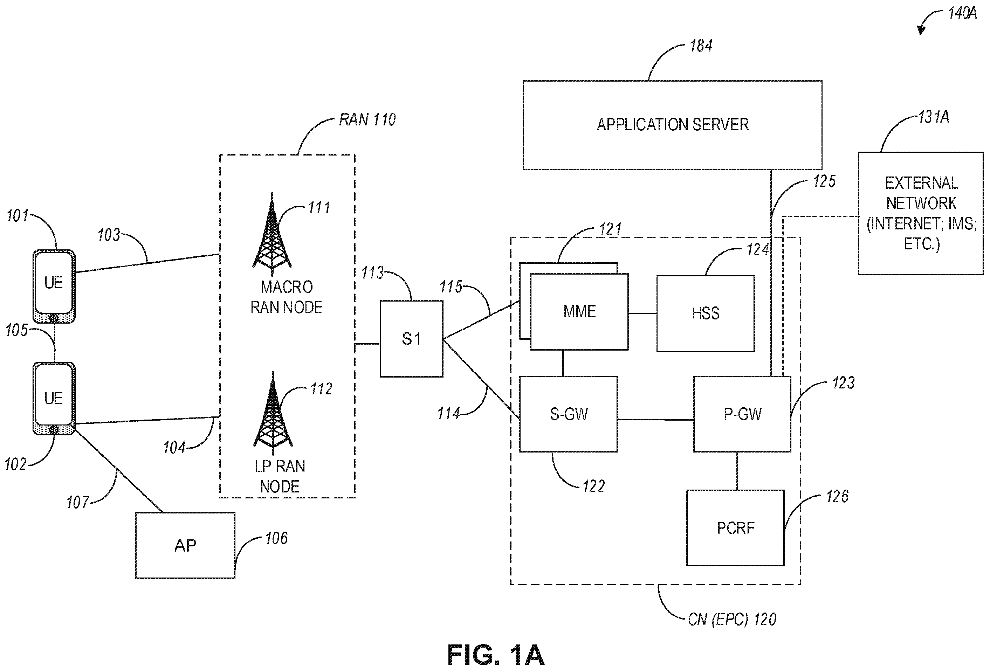

FIG. 1A illustrates an architecture of a network in accordance with some aspects. The network 140A is shown to include user equipment (UE) 101 and UE 102. The UEs 101 and 102 are illustrated as smartphones (e.g., handheld touchscreen mobile computing devices connectable to one or more cellular networks) but may also include any mobile or non-mobile computing device, such as Personal Data Assistants (PDAs), pagers, laptop computers, desktop computers, wireless handsets, drones, or any other computing device including a wired and/or wireless communications interface. The UEs 101 and 102 can be collectively referred to herein as UE 101, and UE 101 can be used to perform one or more of the techniques disclosed herein.

Any of the radio links described herein (e.g., as used in the network 140A or any other illustrated network) may operate according to any exemplary radio communication technology and/or standard.

LTE and LTE-Advanced are standards for wireless communications of high-speed data for UE such as mobile telephones. In LTE- Advanced and various wireless systems, carrier aggregation is a technology according to which multiple carrier signals operating on different frequencies may be used to carry communications for a single UE, thus increasing the bandwidth available to a single device. In some aspects, carrier aggregation may be used where one or more component carriers operate on unlicensed frequencies.

Aspects described herein can be used in the context of any spectrum management scheme including, for example, dedicated licensed spectrum, unlicensed spectrum, (licensed) shared spectrum (such as Licensed Shared Access (LSA) in 2.3-2.4 GHz, 3.4-3.6 GHz, 3.6-3.8 GHz, and further frequencies and Spectrum Access System (SAS) in 3.55-3.7 GHz and further frequencies).

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.

In some aspects, any of the UEs 101 and 102 can comprise an Internet-of-Things (IoT) UE or a Cellular IoT (CIoT) UE, which can comprise a network access layer designed for low-power IoT applications utilizing short-lived UE connections. In some aspects, any of the UEs 101 and 102 can include a narrowband (NB) IoT UE (e.g., such as an enhanced NB-IoT (eNB-IoT) UE and Further Enhanced (FeNB-IoT) UE). An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network includes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

In some aspects, any of the UEs 101 and 102 can include enhanced MTC (eMTC) UEs or further enhanced MTC (FeMTC) UEs.

The UEs 101 and 102 may be configured to connect, e.g., communicatively couple, with a radio access network (RAN) 110. The RAN 110 may be, for example, an Evolved Universal Mobile Telecommunications System (UMTS) Terrestrial Radio Access Network (E-UTRAN), a NextGen RAN (NG RAN), or some other type of RAN. The UEs 101 and 102 utilize connections 103 and 104, respectively, each of which comprises a physical communications interface or layer (discussed in further detail below); in this example, the connections 103 and 104 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth-generation (5G) protocol, a New Radio (NR) protocol, and the like.

In an aspect, the UEs 101 and 102 may further directly exchange communication data via a ProSe interface 105. The ProSe interface 105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 102 is shown to be configured to access an access point (AP) 106 via connection 107. The connection 107 can comprise a local wireless connection, such as, for example, a connection consistent with any IEEE 802.11 protocol, according to which the AP 106 can comprise a wireless fidelity (WiFi^{®}) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), Next Generation NodeBs (gNBs), RAN nodes, and the like, and can comprise ground stations (e.g., terrestrial access points) or satellite stations providing coverage within a geographic area (e.g., a cell). In some aspects, the communication nodes 111 and 112 can be transmission/reception points (TRPs). In instances when the communication nodes 111 and 112 are NodeBs (e.g., eNBs or gNBs), one or more TRPs can function within the communication cell of the NodeBs. The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some aspects, any of the RAN nodes 111 and 112 can fulfill various logical functions for the RAN 110 including, but not limited to, radio network controller (RNC) functions such as radio bearer management, uplink and downlink dynamic radio resource management and data packet scheduling, and mobility management. In an example, any of the nodes 111 and/or 112 can be a new generation Node-B (gNB), an evolved node-B (eNB), or another type of RAN node.

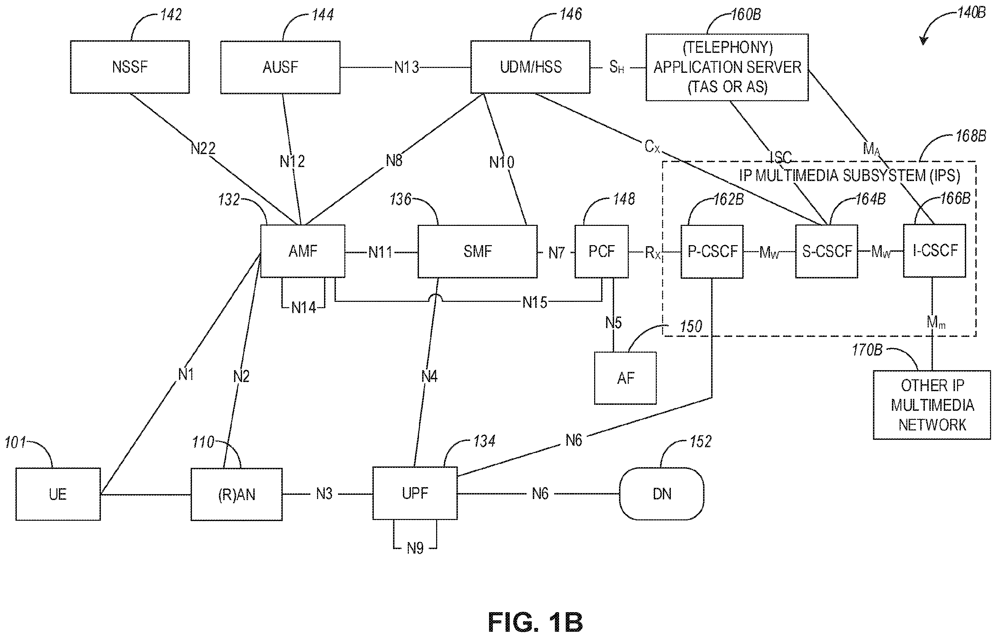

The RAN 110 is shown to be communicatively coupled to a core network (CN) 120 via an S1 interface 113. In aspects, the CN 120 may be an evolved packet core (EPC) network, a NextGen Packet Core (NPC) network, or some other type of CN (e.g., as illustrated in reference to FIGS. 1B-1I). In this aspect, the S1 interface 113 is split into two parts: the S1-U interface 114, which carries traffic data between the RAN nodes 111 and 112 and the serving gateway (S-GW) 122, and the S1-mobility management entity (MME) interface 115, which is a signaling interface between the RAN nodes 111 and 112 and MMEs 121.

In this aspect, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility aspects in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and routes data packets between the RAN 110 and the CN 120. In addition, the S-GW 122 may be a local mobility anchor point for inter-RAN node handovers and also may provide an anchor for inter-3GPP mobility. Other responsibilities of the S-GW 122 may include a lawful intercept, charging, and some policy enforcement.

The P-GW 123 may terminate an SGi interface toward a PDN. The P-GW 123 may route data packets between the EPC network 120 and external networks such as a network including the application server 184 (alternatively referred to as application function (AF)) via an Internet Protocol (IP) interface 125. The P-GW 123 can also communicate data to other external networks 131A, which can include the Internet, IP multimedia subsystem (IPS) network, and other networks. Generally, the application server 184 may be an element offering applications that use IP bearer resources with the core network (e.g., UMTS Packet Services (PS) domain, LTE PS data services, etc.). In this aspect, the P-GW 123 is shown to be communicatively coupled to an application server 184 via an IP interface 125. The application server 184 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Rules Function (PCRF) 126 is the policy and charging control element of the CN 120. In a non-roaming scenario, in some aspects, there may be a single PCRF in the Home Public Land Mobile Network (HPLMN) associated with a UE's Internet Protocol Connectivity Access Network (IP-CAN) session. In a roaming scenario with a local breakout of traffic, there may be two PCRFs associated with a UE's IP-CAN session: a Home PCRF (H-PCRF) within an HPLMN and a Visited PCRF (V-PCRF) within a Visited Public Land Mobile Network (VPLMN). The PCRF 126 may be communicatively coupled to the application server 184 via the P-GW 123.

In some aspects, the communication network 140A can be an IoT network. One of the current enablers of IoT is the narrowband-IoT (NB-IoT).

An NG system architecture can include the RAN 110 and a 5G network core (SGC) 120. The NG-RAN 110 can include a plurality of nodes, such as gNBs and NG-eNBs. The core network 120 (e.g., a 5G core network or SGC) can include an access and mobility function (AMF) and/or a user plane function (UPF). The AMF and the UPF can be communicatively coupled to the gNBs and the NG-eNBs via NG interfaces. More specifically, in some aspects, the gNBs and the NG-e-NBs can be connected to the AMF by NG-C interfaces, and to the UPF by NG-U interfaces. The gNBs and the NG-eNBs can be coupled to each other via Xn interfaces.

In some aspects, the NG system architecture can use reference points between various nodes as provided by 3GPP Technical Specification (TS) 23.501 (e.g., V15.4.0, 2018-12). In some aspects, each of the gNBs and the NG- eNBs can be implemented as a base station, a mobile edge server, a small cell, a home eNB, and so forth. In some aspects, a gNB can be a master node (MN) and NG-eNB can be a secondary node (SN) in a 5G architecture.

FIG. 1B illustrates a non-roaming 5G system architecture in accordance with some aspects. Referring to FIG. 1B, there is illustrated a 5G system architecture 140B in a reference point representation. More specifically, UE 101 can be in communication with RAN 110 as well as one or more other 5G core (SGC) network entities. The 5G system architecture 140B includes a plurality of network functions (NFs), such as access and mobility management function (AMF) 132, session management function (SMF) 136, policy control function (PCF) 148, application function (AF) 150, user plane function (UPF) 134, network slice selection function (NSSF) 142, authentication server function (AUSF) 144, and unified data management (UDM)/home subscriber server (HSS) 146. The -UPF 134 can provide a connection to a data network (DN) 152, which can include, for example, operator services, Internet access, or third-party services. The AMF 132 can be used to manage access control and mobility and can also include network slice selection functionality. The SMF 136 can be configured to set up and manage various sessions according to network policy. The UPF 134 can be deployed in one or more configurations according to the desired service type. The PCF 148 can be configured to provide a policy framework using network slicing, mobility management, and roaming (similar to PCRF in a 4G communication system). The UDM can be configured to store subscriber profiles and data (similar to an HSS in a 4G communication system).

In some aspects, the 5G system architecture 1409 includes an IP multimedia subsystem (IMS) 168B as well as a plurality of IP multimedia core network subsystem entities, such as call session control functions (CSCFs). More specifically, the IMS 168B includes a CSCF, which can act as a proxy CSCF (P-CSCF) 162BE, a serving CSCF (S-CSCF) 164B, an emergency CSCF (E-CSCF) (not illustrated in FIG. 19), or interrogating CSCF (I-CSCF) 166B. The P-CSCF 162B can be configured to be the first contact point for the UE 101 within the IM subsystem (IMS) 168B. The S-CSCF 164B can be configured to handle the session states in the network, and the E-CSCF can be configured to handle certain aspects of emergency sessions such as routing an emergency request to the correct emergency center or PS AP. The I-CSCF 166B can be configured to function as the contact point within an operator's network for all IMS connections destined to a subscriber of that network operator, or a roaming subscriber currently located within that network operator's service area. In some aspects, the I-CSCF 166B can be connected to another IP multimedia network 170B, e.g. an IMS operated by a different network operator.

In some aspects, the UDMAISS 146 can be coupled to an application server 160B, which can include a telephony application server (TAS) or another application server (AS). The AS 160B can be coupled to the IMS 168B via the S-CSCF 164B or the I-CSCF 166B.

A reference point representation shows that interaction can exist between corresponding NF services. For example, FIG. 1B illustrates the following reference points: N1 (between the UE 102 and the AMF 132), N2 (between the RAN 110 and the AMF 132), N3 (between the RAN 110 and the UPF 134), N4 (between the SMF 136 and the UPF 134), N5 (between the PCF 148 and the AF 150), N6 (between the UPF 134 and the DN 152), N7 (between the SIVIF 136 and the PCF 148), N8 (between the UDM 146 and the AMF 132), N9 (between two UPFs 134), N10 (between the UDM 146 and the SNIT' 136), N11 (between the AMF 132 and the SMF 136), N12 (between the AUSF 144 and the AMF 132), N13 (between the AUSF 144 and the UDM 146 ), N14 (between two ATvIFs 132), N15 (between the PCF 148 and the AMF 132 in case of a non-roaming scenario, or between the PCF 148 and a visited network and AMF 132 in case of a roaming scenario), N16 (between two SMFs), and. N22 (between AMF 132 and NSSF 142). Other reference point representations not shown in FIG. 1E can also be used.

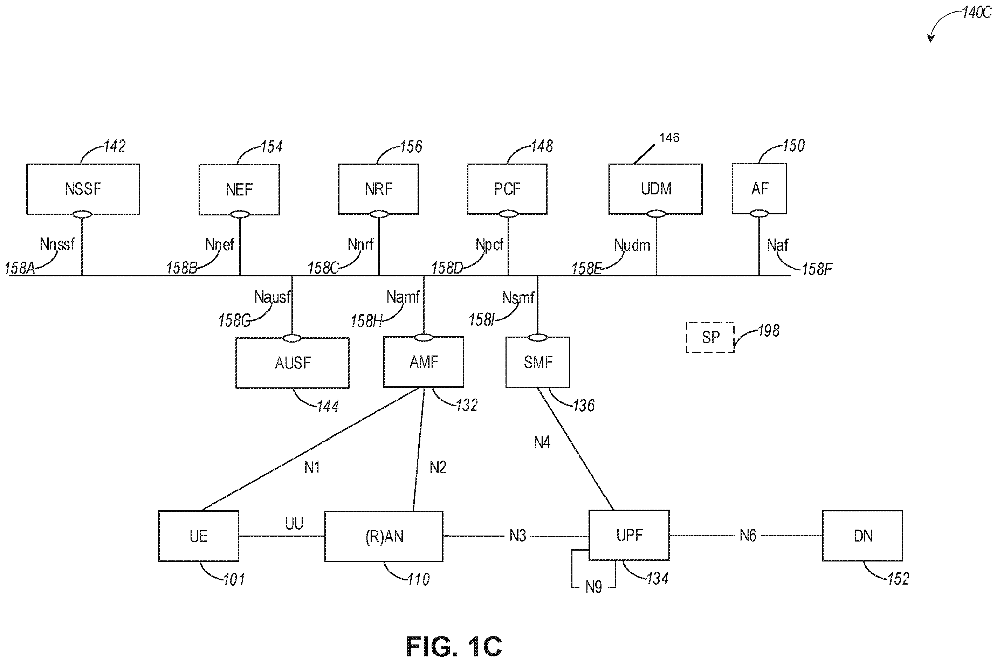

FIG. 1C illustrates a 5G system architecture 140C and a service- based representation. In addition to the network entities illustrated in FIG. 1B, system architecture 140C can also include a network exposure function (NEF) 154 and a network repository function (NRF) 156. In some aspects, 5G system architectures can be service-based and interaction between network functions can be represented by corresponding point-to-point reference points -Ni or as service-based interfaces.

In some aspects, as illustrated in FIG. 1C, service-based representations can be used to represent network functions within the control plane that enable other authorized network functions to access their services. In this regard, 5G system architecture 140C can include the following service- based interfaces: Namf 158H (a service-based interface exhibited by the AN/F 132), Nsmf 1581 (a service-based interface exhibited by the SMF 136), Nnef 158B (a service-based interface exhibited by the NEF 154), Npcf 158D (a service-based interface exhibited by the PCF 148), a Nudm 158E (a service- based interface exhibited by the UDM 146), Naf 158F (a service-based interface exhibited by the AF 150), Nnrf 158C (a service-based interface exhibited by the NRF 156), Nnssf 158A (a service-based interface exhibited by the NSSF 142), Nausf 158G (a service-based interface exhibited by the AUSF 144). Other service-based interfaces (e.g., -Nudr, -N5g-eir, and Nudsf) not shown in FIG. 1C can also be used.

In some aspects, handover in NR high-frequency range with beamforming may increase interruption time in comparison to LTE systems due to a beam sweep delay. Reliability reduction due to beamforming characteristics provides smaller coverage. In order to achieve Oms interruption, multi- connectivity handover may be used. Techniques discussed herein can be used for PDCP and ROHC handling for multi-connectivity handover (HO).

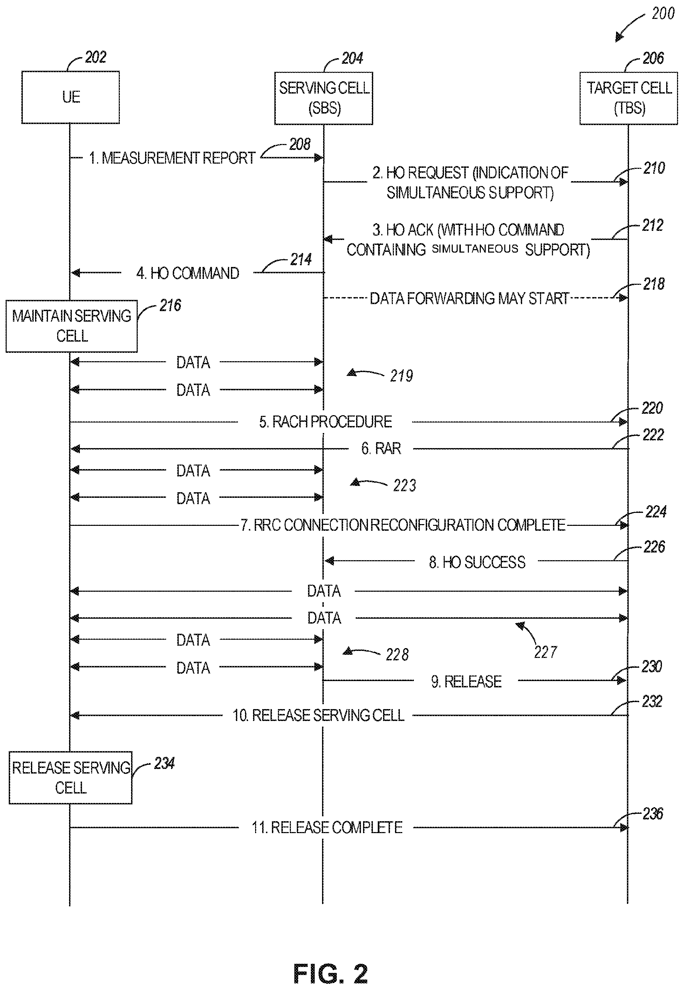

FIG. 2 illustrates a swimlane diagram 200 of a handover using multi-connectivity, in accordance with some aspects. FIG. 2 shows the signaling flow of a multi-connectivity handover between a UE 202, a source cell 204, and a target cell 206. The serving cell is also referred to as a Serving Base Station (SBS), and the target cell is referred to as a Target Base Station (TBS).

Referring to FIG. 2, at operation 208, a measurement report is triggered based on a measurement event. The measurement event can be configured prior to operation 208, by the source cell 204.

At operation 210, the source cell 204 can make a handover (HO) decision based on the received measurement report and communicates a handover request to the target cell 206. The handover request can include a simultaneous link enable indication (e.g., an indication that the SBS supports a multi-connectivity handover).

At operation 212, the target cell 206 communicates a handover acknowledgment to the source cell 204. The handover acknowledgment can include an indication that the target cell 206 supports multi-connectivity (e.g., during a handover). The handover acknowledgement further includes required HO parameters such as random access channel (RACH) procedure parameters, as well as dedicated Transport Network Layer (TNL) information for forwarding partial PDCP PDUs (e.g., PDCP PDUs that have been compressed with ROHC and have an allocated sequence number, or SN, for forwarding by the SBS to the TBS). If the TBS does not support multi-connectivity, the TBS may reject a multi-connectivity HO and may proceed with a regular HO. In this case, the target cell 206 communicates an HO command in the HO acknowledgment with indication of no multi-connectivity support.

At operation 214, the source cell 204 communicates a handover command (e.g., the handover command received with the handover acknowledgment at operation 212, with the HO command indicating support by the SBS and the TBS for multi-connectivity HO).

After the HO command is communicated at operation 214, data forwarding from the SBS to the TBS may start at operation 218. At operation 216, the UE 202 maintains connectivity with the serving cell 204. At operation 219, data may be communicated between the UE 202 and the SBS 204 during the HO.

At operation 220, the UE 202 performs a RACH procedure to access the target cell 206, using the RACH information in the HO command provided by the target cell 206. At operation 222, the target cell communicates a RACH response (RAR) for a successful RACH procedure.

At operations 223, the UE 202 continues to communicate with the serving cell 204 during the HO.

At operation 224, the UE 202 communicates an RRC Connection Reconfiguration Complete message to the target cell 206 to indicate HO completion. At operation 226, the target cell 206 communicates an HO success indication to the serving cell 204.

At operation 227, the UE 202 communicates with the target cell 206, and at operation 228, the UE 202 communicates with the serving cell 204.

At operation 230, the serving cell 204 communicates a release message to the target cell 206. At operation 232, the target cell 206 communicates a serving cell release message to the UE 202. At operation 234, the UE 202 releases the serving cell 204. At operation 236, the UE 202 communicates a release completion message to the target cell 206.

As illustrated in FIG. 2, during a multi-connectivity HO, the UE will go through the following 3 phases: a single connection with the serving cell (this is before the handover starts); a multi-connection with both the serving and the target cell (this is during the handover); and a single connection with the target cell (this is after the serving cell is released).

In aspects when a non-split bearer architecture is used, after the HO command is received, the UE will receive two streams of data (one from the source cell and one from the target cell) during the handover. In this regard, the UE may merge and reorder the PDCP packets across the source PDCP and the target PDCP in the SBS and TBS protocol stacks at the UE.

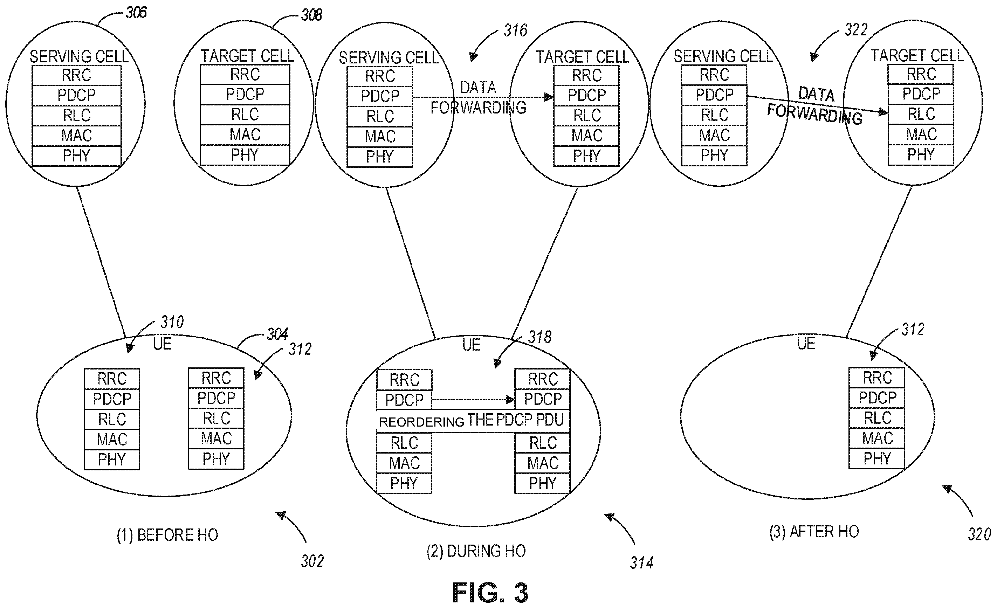

FIG. 3 illustrates PDCP and ROHC handling before, during, and after a multi-connectivity handover, in accordance with some aspects. Referring to FIG.3, diagram 302 illustrates PDPC and ROHC handling before the handover (e.g., before the UE receives the HO command). At this phase of the HO, the UE 304 connects only to the serving cell 306 and uses protocol stack 310 to process PDCP PDUs from the serving cell. After the UE receives the HO command with simultaneous connection (i.e., multi-connectivity) enabled during HO, the LIE configures a new (second) protocol stack 312 for the target cell 308. When the target cell 308 sends data to the UE 304, the data will go to the corresponding protocol stack 310 (for data originating from the serving cell 306, sent by the serving cell to the target cell, and forwarded by the target cell to the UE) or 312 (for data originating from and sent by the target cell). Additionally, the UE 304 can be configured with two sets of security keys - one set for communications with the serving cell 306 and another set for communications with the target cell 308.

During the processing of source cell PDCP PDUs, the source cell performs compression via ROHC and allocates a sequence number (SN) for the PDCP PDU. The PDCP PDU is then integrity protected and encrypted using the set of security keys associated with the serving cell. The encrypted PDCP PDU is then communicated to the LIE.

Diagram 314 illustrates PDCP and ROHC handling during the multi-connectivity handover (e.g., the HO illustrated in FIG. 2. Since source and target cells apply different security keys, the model for DL in the network side can be performed as discussed below in connection with packets forwarded to the target cell.

During the HO, after the LIE has completed the RACH procedure and is connected with both the serving cell and the target cell (e.g., after operation 220 in FIG. 2), the serving cell starts forwarding PDCP packet to the target cell at operation 316. More specifically, the source cell 306 processes PDCP PDU packets by applying compression via ROHC and allocating an SN for the PDCP PDU. The source cell 306 then forwards the partial PDCP PDU (after R.OHC) and the SN to the target cell 308 at operation 316. The target cell 308 only performs integrity protection and/or ciphering on the partial PDCP PDU (e.g., using the set of security keys associated with the target cell).

After the target cell forwards the PDCP PDU that originated at the serving cell, the following processing can be configured at the UE receiver side. More specifically, the UE can initially perform a common operation with regard to the PDCP PDU received from the target cell, such as determine the PDCP PDU count (or SN). The UE performs separate operations for each of the communication links with the serving cell and the target cell, including performing integrity protection and deciphering (e.g., using a set of keys corresponding to the serving or target cell, based on which cell the PDCP PDU is received from). The received PDCP PDU, after integrity protection and deciphering, is stored in a common buffer (e.g., a buffer shared between the protocol stacks 3 10 and 312). After storage in the common buffer, PDCP PDU reordering 318 is performed (e.g., based on the SN and/or whether the PDCP PDU originates from the source or target cell), and then ROHC decompression is performed to decompress the reordered PDCP PDUs.

Diagram 320 illustrates PDCP and ROHC handling after the mufti-connectivity handover (e.g., the HO illustrated in FIG. 2). After the HO, the serving cell protocol stack 310 is removed by the UE. Any PDCP PDUs originating from the serving cell are forwarded in a data forwarding operation 322 from the PDCP layer at the serving cell to the radio link control (RLC) layer at the target cell 308, for communication to the UE 304.

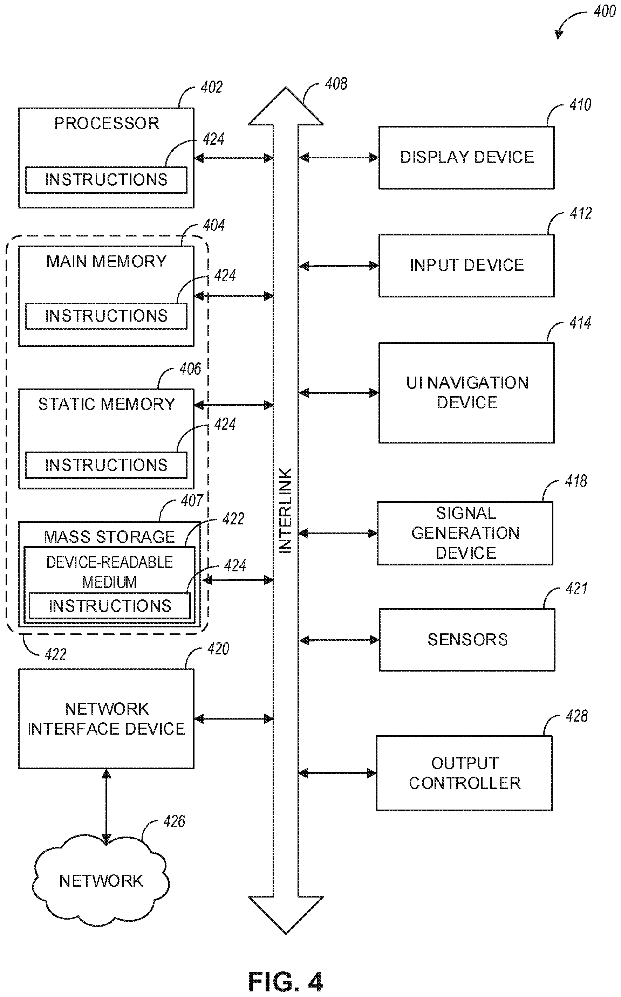

FIG. 4 illustrates a block diagram of a communication device such as an evolved Node-B (eNB), a next generation Node-B (gNB), an access point (AP), a wireless station (STA), a mobile station (MS), or a user equipment (UE), in accordance with some aspects and to perform one or more of the techniques disclosed herein. In alternative aspects, the communication device 400 may operate as a standalone device or may be connected (e.g., networked) to other communication devices.

Circuitry (e.g., processing circuitry) is a collection of circuits implemented in tangible entities of the device 400 that include hardware (e.g., simple circuits, gates, logic, etc.). Circuitry membership may be flexible over time. Circuitries include members that may, alone or in combination, perform specified operations when operating. In an example, the hardware of the circuitry may be immutably designed to carry out a specific operation (e.g., hardwired). In an example, the hardware of the circuitry may include variably connected physical components (e.g., execution units, transistors, simple circuits, etc.) including a machine-readable medium physically modified (e.g., magnetically, electrically, moveable placement of invariant massed particles, etc.) to encode instructions of the specific operation.

In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine-readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the device 400 follow.

In some aspects, the device 400 may operate as a standalone device or may be connected (e.g., networked) to other devices. In a networked deployment, the communication device 400 may operate in the capacity of a server communication device, a client communication device, or both in server-client network environments. In an example, the communication device 400 may act as a peer communication device in peer-to-peer (P2P) (or other distributed) network environment. The communication device 400 may be a UE, eNB, PC, a tablet PC, a STB, a PDA, a mobile telephone, a smartphone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), and other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using the software, the general-purpose hardware processor may be configured as respective different modules at different times. The software may accordingly configure a hardware processor, for example, to constitute a particular module at one instance of time and to constitute a different module at a different instance of time.

Communication device (e.g., UE) 400 may include a hardware processor 402 (e.g., a central processing unit (CPU), a graphics processing unit (GPU), a hardware processor core, or any combination thereof), a main memory 404, a static memory 406, and mass storage 407 (e.g., hard drive, tape drive, flash storage, or other block or storage devices), some or all of which may communicate with each other via an interlink (e.g., bus) 408.

The communication device 400 may further include a display device 410, an alphanumeric input device 412 (e.g., a keyboard), and a user interface (UI) navigation device 414 (e.g., a mouse). In an example, the display device 410, input device 412 and UI navigation device 414 may be a touchscreen display. The communication device 400 may additionally include a signal generation device 418 (e.g., a speaker), a network interface device 420, and one or more sensors 421, such as a global positioning system (GPS) sensor, compass, accelerometer, or another sensor. The communication device 400 may include an output controller 428, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 407 may include a communication device-readable medium 422, on which is stored one or more sets of data structures or instructions 424 (e.g., software) embodying or utilized by any one or more of the techniques or functions described herein. In some aspects, registers of the processor 402, the main memory 404, the static memory 406, and/or the mass storage 407 may be, or include (completely or at least partially), the device-readable medium 422, on which is stored the one or more sets of data structures or instructions 424, embodying or utilized by any one or more of the techniques or functions described herein. In an example, one or any combination of the hardware processor 402, the main memory 404, the static memory 406, or the mass storage 416 may constitute the device-readable medium 422.

As used herein, the term "device-readable medium" is interchangeable with "computer-readable medium" or "machine-readable medium". While the communication device-readable medium 422 is illustrated as a single medium, the term "communication device-readable medium" may include a single medium or multiple media (e.g., a centralized or distributed database, and/or associated caches and servers) configured to store the one or more instructions 424. The term "communication device-readable medium" is inclusive of the terms "machine-readable medium" or "computer-readable medium", and may include any medium that is capable of storing, encoding, or carrying instructions (e.g., instructions 424) for execution by the communication device 400 and that cause the communication device 400 to perform any one or more of the techniques of the present disclosure, or that is capable of storing, encoding or carrying data structures used by or associated with such instructions. Non-limiting communication device-readable medium examples may include solid-state memories and optical and magnetic media. Specific examples of communication device-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device-readable media may include non-transitory communication device-readable media. In some examples, communication device-readable media may include communication device-readable media that is not a transitory propagating signal.

The instructions 424 may further be transmitted or received over a communications network 426 using a transmission medium via the network interface device 420 utilizing any one of a number of transfer protocols. In an example, the network interface device 420 may include one or more physical jacks (e.g., Ethernet, coaxial, or phone jacks) or one or more antennas to connect to the communications network 426. In an example, the network interface device 420 may include a plurality of antennas to wirelessly communicate using at least one of single-input-multiple-output (SIMO), MIMO, or multiple-input- single-output (MISO) techniques. In some examples, the network interface device 420 may wirelessly communicate using Multiple User MIIVIO techniques.

The term "transmission medium" shall be taken to include any intangible medium that is capable of storing, encoding or carrying instructions for execution by the communication device 400, and includes digital or analog communications signals or another intangible medium to facilitate communication of such software. In this regard, a transmission medium in the context of this disclosure is a device-readable medium.

## Claims

1. A method performed by a user equipment, UE, in association with a multi-connectivity handover with a source base station, SBS, and a target base station, TBS, wherein the multi-connectivity handover comprises a phase during which the UE is simultaneously connected to both the SBS and the TBS, the method comprising the steps of:
transmitting (208) a measurement report to the SBS (204), the measurement report triggered based on a measurement event configured by the SBS (204);
receiving (214) radio resource control, RRC, signaling from the SBS (204), the RRC signaling including a handover command, the handover command including an indication for multi-connectivity support during handover by the SBS (204) and the TBS (206);
configuring a first protocol stack associated with the SBS (204) and a second protocol stack associated with the TBS (206); and
processing a packet data convergence protocol, PDCP, protocol data unit, PDU, received at the UE during the handover, using the first protocol stack or the second protocol stack.

2. The method of claim 1, wherein configuring the first protocol stack and the second protocol stack, comprises:
configuring a first set of security keys for integrity and deciphering operations of data received from the SBS (204); and
configuring a second set of security keys for integrity and deciphering operations of data received from the TBS (206).

3. The method of claim 1, further comprising:
determining a sequence number, SN, of the PDCP PDU received at the UE (202) during the handover.

4. The method of claim 3, further comprising:
performing integrity and deciphering operations of the PDCP PDU to generate a deciphered PDCP PDU using a first set of security keys associated with the SBS or a second set of security keys associated with the TBS (206), based on whether the PDCP PDU is received from the SBS (204) or the TBS (206).

5. The method of claim 4, further comprising:
storing the deciphered PDCP PDU in a common buffer shared between the first protocol stack and the second protocol stack.

6. The method of claim 5, further comprising:
performing re-ordering to associate the deciphered PDCP PDU with the first protocol stack or the second protocol stack, based on the determined SN; and
performing robust header compression, ROHC, decompression of the deciphered PDCP PDU, subsequent to the reordering.

7. The method of claim 1, further comprising:
releasing (234) the SBS (204) based on a release command (232) from the TBS (206);
transmitting (236) a release completion message to the TBS (206), in response to the release command; and
remove the first protocol stack associated with the SBS (204).

8. The method of claim 7, further comprising, prior to the release command from the TBS (206):
performing (220) a random access channel, RACH, procedure with the TBS (206); and
transmit a RRC reconfiguration complete message to the TBS (206).

9. An apparatus, comprising a processor configured to cause a user equipment device, UE (202), to perform a method according to any of claims 1-8.

10. A method performed by a source base station, SBS, (204), in association with a multi-connectivity handover of a user equipment device, UE, from the SBS to a target base station, TBS, wherein the multi-connectivity handover comprises a phase during which the UE is simultaneously connected to both the SBS and the TBS, the method comprising the steps of:
receiving (208), at the SBS (204) from the UE, a measurement report, the measurement report triggered based on a measurement event configured by the SBS;
transmitting (214), from the SBS to the UE, radio resource control, RRC, signaling, the RRC signaling including a handover command, the handover command including an indication for multi-connectivity support during handover by the SBS (204) and the TBS (206), wherein a first protocol stack is associated with the SBS (204) and a second protocol stack is associated with the TBS (206); and
transmitting, to the UE during the handover, a packet data convergence protocol, PDCP, protocol data unit, PDU.

11. An apparatus, comprising a processor configured to cause a base station to perform a method according to claim 10.

## Patentansprüche

1. Verfahren, das durch eine Benutzereinrichtung, UE, in Verknüpfung mit einer Multikonnektivitätsübergabe mit einer Quellbasisstation, SBS, und einer Zielbasisstation, TBS, durchgeführt wird, wobei die Multikonnektivitätsübergabe eine Phase umfasst, während der die UE gleichzeitig sowohl mit der SBS als auch mit der TBS verbunden ist, das Verfahren umfassend die Schritte:
Übertragen (208) eines Messberichts an die SBS (204), wobei der Messbericht basierend auf einem von der SBS (204) konfigurierten Messereignis ausgelöst wird;
Empfangen (214) von Funkressourcensteuerungssignalisierung, RRC-, Signalisierung von der SBS (204), wobei die RRC-Signalisierung einen Übergabebefehl einschließt, wobei der Übergabebefehl eine Angabe für Multikonnektivitätsunterstützung während der Übergabe durch die SBS (204) und die TBS (206) einschließt;
Konfigurieren eines mit der SBS (204) verknüpften ersten Protokollstapels und eines mit der TBS (206) verknüpften zweiten Protokollstapels; und
Verarbeiten einer Paketdatenkonvergenzprotokoll-Protokolldateneinheit, PDCP-PDU, die während der Übergabe an der UE empfangen wird, unter Verwendung des ersten Protokollstapels oder des zweiten Protokollstapels.

2. Verfahren nach Anspruch 1, wobei das Konfigurieren des ersten Protokollstapels und des zweiten Protokollstapels umfasst:
Konfigurieren eines ersten Satzes von Sicherheitsschlüsseln für Integritäts- und Entschlüsselungsoperationen von Daten, die von der SBS (204) empfangen werden; und
Konfigurieren eines zweiten Satzes von Sicherheitsschlüsseln für Integritäts- und Entschlüsselungsoperationen von Daten, die von der TBS (206) empfangen werden.

3. Verfahren nach Anspruch 1, ferner umfassend:
Bestimmen einer Sequenznummer, SN, der an der UE (202) während der Übergabe empfangenen PDCP-PDU.

4. Verfahren nach Anspruch 3, ferner umfassend:
Durchführen von Integritäts- und Entschlüsselungsoperationen der PDCP-PDU, um eine entschlüsselte PDCP-PDU unter Verwendung eines ersten Satzes von Sicherheitsschlüsseln, die mit der SBS verknüpft sind, oder eines zweiten Satzes von Sicherheitsschlüsseln, die mit der TBS (206) verknüpft sind, zu erzeugen, basierend darauf, ob die PDCP-PDU von der SBS (204) oder der TBS (206) empfangen wird.

5. Verfahren nach Anspruch 4, ferner umfassend:
Speichern der entschlüsselten PDCP-PDU in einem gemeinsamen Puffer, der zwischen dem ersten Protokollstapel und dem zweiten Protokollstapel gemeinsam genutzt wird.

6. Verfahren nach Anspruch 5, ferner umfassend:
Durchführen einer Umordnung, um die entschlüsselte PDCP-PDU mit dem ersten Protokollstapel oder dem zweiten Protokollstapel zu verknüpfen, basierend auf der bestimmten SN; und
Durchführen einer Robust-Header-Compression-Dekomprimierung, ROHC-Dekomprimierung, der entschlüsselten PDCP-PDU im Anschluss an das Umordnen.

7. Verfahren nach Anspruch 1, ferner umfassend:
Freigeben (234) der SBS (204) basierend auf einem Freigabebefehl (232) von der TBS (206);
Übertragen (236) einer Freigabeabschlussnachricht an die TBS (206) als Reaktion auf den Freigabebefehl; und
Entfernen des ersten Protokollstapels, der mit der SBS (204) verknüpft ist.

8. Verfahren nach Anspruch 7, ferner umfassend, vor dem Freigabebefehl von der TBS (206):
Durchführen (220) eines Direktzugriffskanal-Vorgangs, RACH-Vorgang, mit der TBS (206); und
Übertragen einer RRC-Rekonfigurationsabschlussnachricht an die TBS (206).

9. Einrichtung, umfassend einen Prozessor, der konfiguriert ist, um eine Benutzereinrichtungsvorrichtung, UE (202), zu veranlassen, ein Verfahren nach einem der Ansprüche 1 bis 8 durchzuführen.

10. Verfahren, das durch eine Quellbasisstation, SBS, (204) in Verbindung mit einer Multikonnektivitätsübergabe einer Benutzereinrichtungsvorrichtung, UE, von der SBS an eine Zielbasisstation, TBS, durchgeführt wird, wobei die Multikonnektivitätsübergabe eine Phase umfasst, während der die UE gleichzeitig sowohl mit der SBS als auch mit der TBS verbunden ist, das Verfahren umfassend die Schritte:
Empfangen (208), an der SBS (204) von der UE, eines Messberichts, wobei der Messbericht basierend auf einem durch die SBS konfigurierten Messereignis ausgelöst wird;
Übertragen (214), von der SBS an die UE, einer Funkressourcensteuerungssignalisierung, RRC-Signalisierung, wobei die RRC-Signalisierung einen Übergabebefehl einschließt, wobei der Übergabebefehl eine Angabe für Multikonnektivitätsunterstützung während der Übergabe durch die SBS (204) und die TBS (206) einschließt, wobei ein erster Protokollstapel mit der SBS (204) verknüpft ist und ein zweiter Protokollstapel mit der TBS (206) verknüpft ist; und
Übertragen, an die UE während der Übergabe, einer Paketdatenkonvergenzprotokoll-Protokolldateneinheit, PDCP-PDU.

11. Einrichtung, umfassend einen Prozessor, der konfiguriert ist, um eine Basisstation zu veranlassen, ein Verfahren nach Anspruch 10 durchzuführen.

## Revendications

1. Procédé réalisé par un équipement utilisateur, UE, en association avec un transfert intercellulaire à connectivité multiple avec une station de base source, SBS, et une station de base cible, TBS, dans lequel le transfert intercellulaire à connectivité multiple comprend une phase pendant laquelle l'UE est connecté simultanément à la fois à la SBS et à la TBS, le procédé comprenant les étapes consistant à :
transmettre (208) un rapport de mesure à la SBS (204), le rapport de mesure étant déclenché sur la base d'un événement de mesure configuré par la SBS (204) ;
recevoir (214) une signalisation de commande de ressources radio, RRC, en provenance de la SBS (204), la signalisation RRC comportant un ordre de transfert intercellulaire, l'ordre de transfert intercellulaire comportant une indication pour la prise en charge de connectivité multiple pendant le transfert intercellulaire par la SBS (204) et la TBS (206) ;
configurer une première pile de protocoles associée à la SBS (204) et une seconde pile de protocoles associée à la TBS (206) ; et
traiter une unité de données de protocole, PDU, de protocole de convergence de données par paquets, PDCP, reçue au niveau de l'UE pendant le transfert intercellulaire, à l'aide de la première pile de protocoles ou de la seconde pile de protocoles.

2. Procédé selon la revendication 1, dans lequel la configuration de la première pile de protocoles et de la seconde pile de protocoles comprend :
la configuration d'un premier ensemble de clés de sécurité pour des opérations d'intégrité et de déchiffrement de données reçues à partir de la SBS (204) ; et
la configuration d'un second ensemble de clés de sécurité pour des opérations d'intégrité et de déchiffrement de données reçues à partir de la TBS (206).

3. Procédé selon la revendication 1, comprenant en outre :
la détermination d'un numéro de séquence, SN, de la PDU PDCP reçue au niveau de l'UE (202) pendant le transfert intercellulaire.

4. Procédé selon la revendication 3, comprenant en outre :
la réalisation des opérations d'intégrité et de déchiffrement de la PDU PDCP pour générer une PDU PDCP déchiffrée à l'aide d'un premier ensemble de clés de sécurité associé à la SBS ou un second ensemble de clés de sécurité associé à la TBS (206), selon que la PDU PDCP est reçue de la SBS (204) ou de la TBS (206).

5. Procédé selon la revendication 4, comprenant en outre :
le stockage de la PDU PDCP déchiffrée dans une mémoire tampon commune partagée entre la première pile de protocoles et la seconde pile de protocoles.

6. Procédé selon la revendication 5, comprenant en outre :
la réalisation d'un réordonnancement pour associer la PDU PDCP déchiffrée à la première pile de protocoles ou à la seconde pile de protocoles, sur la base du SN déterminé ; et
la réalisation d'une décompression de compression d'en-tête robuste, ROHC, de la PDU PDCP déchiffrée, à la suite du réordonnancement.

7. Procédé selon la revendication 1, comprenant en outre :
la libération (234) de la SBS (204) sur la base d'un ordre de libération (232) provenant de la TBS (206) ;
la transmission (236) d'un message d'achèvement de libération à la TBS (206), en réponse à l'ordre de libération ; et
la suppression de la première pile de protocoles associée à la SBS (204).

8. Procédé selon la revendication 7, comprenant en outre, avant l'ordre de libération provenant de la TBS (206) :
la réalisation (220) d'une procédure de canal d'accès aléatoire, RACH, avec la TBS (206) ; et
la transmission d'un message de reconfiguration RRC achevée à la TBS (206).

9. Appareil, comprenant un processeur configuré pour amener un dispositif d'équipement utilisateur, UE (202) à réaliser un procédé selon l'une quelconque des revendications 1 à 8.

10. Procédé réalisé par une station de base source, SBS, (204), en association avec un transfert intercellulaire à connectivité multiple d'un dispositif d'équipement utilisateur, UE, de la SBS vers une station de base cible, TBS, dans lequel le transfert intercellulaire à connectivité multiple comprend une phase pendant laquelle l'UE est connecté simultanément à la fois à la SBS et à la TBS, le procédé comprenant les étapes consistant à :
recevoir (208), au niveau de la SBS (204) en provenance de l'UE, un rapport de mesure, le rapport de mesure étant déclenché sur la base d'un événement de mesure configuré par la SBS ;
transmettre (214), du SBS à l'UE, une signalisation de commande de ressources radio, RRC, la signalisation RRC comportant un ordre de transfert intercellulaire, l'ordre de transfert intercellulaire comportant une indication pour la prise en charge de connectivité multiple pendant le transfert intercellulaire par la SBS (204) et la TBS (206), dans lequel une première pile de protocoles est associée à la SBS (204) et une seconde pile de protocoles est associée à la TBS (206) ; et
transmettre, à l'UE pendant le transfert intercellulaire, une unité de données de protocole, PDU, de protocole de convergence de données par paquets, PDCP.

11. Appareil, comprenant un processeur configuré pour amener une station de base à réaliser un procédé selon la revendication 10.
